**Europäisches Patentamt**

**European Patent Office**

**Office européen des brevets**

(19)

(11) Numéro de publication : **0 294 289 B1**

## (12) FASCICULE DE BREVET EUROPEEN

(45) Date de publication du fascicule du brevet :
**19.02.92 Bulletin 92/08**

(51) Int. Cl.$^5$ : **B64C 27/51**, B64C 27/33

(21) Numéro de dépôt : **88401334.3**

(22) Date de dépôt : **02.06.88**

(54) **Bras de liaison torsible et flexible avec amortissement de flexion intégré, en particulier pour la liaison d'une pale de rotor à son moyeu, et rotor et moyeu équipés de tels bras.**

(30) Priorité : **04.06.87 FR 8707778**

(43) Date de publication de la demande :
**07.12.88 Bulletin 88/49**

(45) Mention de la délivrance du brevet :
**19.02.92 Bulletin 92/08**

(84) Etats contractants désignés :
**DE GB IT**

(56) Documents cités :
**FR-A- 2 041 747**

(73) Titulaire : **AEROSPATIALE Société Nationale Industrielle**
**37, Boulevard de Montmorency**
**F-75781 Paris Cédex 16 (FR)**

(72) Inventeur : **Aubry, Jacques Antoine**
**2 avenue Marie Gasquet**
**F-13480 Cabries (FR)**
Inventeur : **Azeau, Jean Jacques Emile**
**Vallon Rambert**
**F-13120 Gardanne (FR)**

(74) Mandataire : **Lhuillier, René et al**
**ARMENGAUD JEUNE CABINET LEPEUDRY**
**52, avenue Daumesnil**
**F-75012 Paris (FR)**

**EP 0 294 289 B1**

Jouve, 18, rue Saint-Denis, 75001 PARIS

## Description

La présente invention se rapporte essentiellement à un bras de liaison rigide en traction dans son axe longitudinal mais souple en flexion et torsion et comportant un amortissement de flexion intégré, destiné à relier l'un à l'autre deux corps relativement rigides, et en particulier à assurer la liaison d'une pale de rotor à son moyeu.

L'invention a également pour objet une application d'un tel bras de liaison à la constitution de rotors et moyeux de rotors sans articulation et équipés de tels bras, notamment pour aérodynes à voilures tournantes, tels que les hélicoptères.

Par le brevet français 2 041 747, relatif à un élément de liaison entre deux corps permettant leur rotation relative suivant trois axes et son application à la constitution de rotors sans articulation, on a déjà proposé un élément ou bras de liaison permettant des déplacements relatifs limités de ces deux corps équivalant à des rotations autour d'au moins un axe et, de préférence, autour de trois axes orthogonaux deux à deux, et comportant, entre deux parties d'extrémités rigides, destinées à être chacune rattachées ou au moins partiellement intégrées à l'un des corps, une partie centrale allongée, souple en flexion et torsion, assurant avec amortissement un rappel élastique vers une position moyenne de repos des deux corps, et qui comprend un faisceau composite longitudinal de baguettes sensiblement unidirectionnelles de forte résistance mécanique, en particulier à la traction, dont chacune présente une certaine élasticité en flexion et est formée par agglomération d'un grand nombre de fibres et/ou filaments minéraux ou synthétiques par une résine synthétique d'imprégnation polymérisée, chaque baguette étant individuellement enrobée d'un élastomère vulcanisé souple, présentant un coefficient de cisaillement relativement faible et une rémanence notable aux déformations, et qui constitue une matrice de liaison desdites baguettes pour former ledit faisceau composite.

Il est bien connu, en effet, que les rotors de différents types, tels que ceux des ventilateurs ou des souffleries, ainsi que ceux équipant les aérodynes à voilures tournantes, notamment les rotors anti-couple et les rotors sustentateurs d'hélicoptères, nécessitent une liaison des pales à leur moyeu autorisant plusieurs degrés de liberté.

Dans les rotors sustentateurs ou principaux d'hélicoptéres, en particulier, chaque pale doit pouvoir osciller en battement, perpendiculairement au plan de rotation du rotor, et en trainée, dans le plan de rotation du rotor, et pouvoir tourner autour de son axe longitudinal, pour les changements de pas de la pale.

Classiquement, ces oscillations et cette rotation ont été assurées au moyen d'articulations séparées, à axes pivotant dans des paliers à roulement, mais il a été souvent proposé de supprimer une ou plusieurs de ces articulations, dans le but de simplifier la structure, d'améliorer la fiabilité, et de réduire les coûts de réalisation et d'entretien de ces moyeux de conception usuelle.

Ces propositions ont finalement conduit à la réalisation de moyeux de rotors dits " sans articulation" ou encore "non articulés", et le bras souple de liaison proposé dans le brevet français n°2 041 747 précité, et offrant une possibilité de rotation limitée autour de trois axes orthogonaux deux à deux qui correspond aux trois degrés de liberté permis par une rotule, est particulièrement approprié pour assurer la liaison entre une pale de rotor et son moyeu, dans le cadre d'un tel rotor à moyeu "sans articulations" ou "non articulé".

En effet, la combinaison des valeurs de la résistance mécanique en traction et du module d'élasticité des baguettes de fibres du faisceau composite concourt à l'obtention de la souplesse en flexion du bras de liaison, avec rappel élastique vers la position initiale, tandis que le module de cisaillement relativement faible de l'élastomère d'enrobage, dont la proportion dans le faisceau composite est comprise entre environ 20 et 50 %, ainsi que sa rémanence aux déformations permettent respectivement des déplacements relatifs des baguettes dans le faisceau, lorsque ce dernier est déformé en torsion et en flexion, et un amortissement dynamique des mouvements auxquels le faisceau composite est soumis. De plus, il a été proposé, d'une part ,que la partie centrale allongée, en faisceau composite ternaire constitué des fibres, de la résine polymérisée et rigide d'agglomération en baguettes, et de l'élastomère souple d'enrobage des baguettes, soit entourée par une gaine déformable inextensible, formant une frette emprisonnant l'élastomère, et, d'autre part, qu'un bon raccordement du faisceau souple composite avec les parties d'extrémités rigides soit assuré en prolongeant les baguettes du faisceau dans lesdites parties d'extrémités, dans lesquelles les baguettes sont solidarisées par une résine thermoducissable polymérisée, dont la rigidité est beaucoup plus grande que celle de l'élastomère d'enrobage des baguettes du faisceau allongé, cette résine thermodurcissable pouvant en particulier être une résine du type époxyde, identique ou non à celle qui agglomère les fibres et filaments en baguettes, et les parties d'extrémités rigides peuvent, en plus des baguettes, comporter des armatures de renforcement complémentaires, telles que des plaques de métal ou du tissu de fibres de verre, formant, de préférence, des couches alternées avec des couches de baguettes.

Afin de permettre une fabrication industrielle fiable, aisée et économique d'éléments allongés souples en flexion et torsion, destinés à raccorder chacun deux organes en présentant une forte résistance en traction tout en restant souples en torsion autour de leur axe longitudinal et flexibles perpendiculairement à cet axe, et comportant chacun un faisceau composite ternaire comprenant des fibres et filaments à forte résistance mécanique, une résine thermodurcissable d'agglomération des fils et filaments en baguettes profilées de forme quelconque, et un élastomère vulcanisé souple d'enrobage individuel de chaque baguette et d'assemblage et d'agglomération des baguettes juxtaposées en faisceau, et tel que les baguettes s'épanouissent aux extrémités du faisceau où elles sont intercalées entre des nappes de tissus de fibres synthétiques, comme décrit dans le brevet français précité, il a déjà été proposé dans le brevet français n° 2 474 395 au nom de la Demanderesse, un procédé de fabrication consistant tout d'abord à réaliser séparément des nappes unitaires en matériau fibreux, dont chacune est constituée d'un ensemble de baguettes imprégnées de résine thermodurcissable et dont les extrémités sont pincées entre des nappes d'extrémités et des cales latérales d'extrémités en tissu de fibres également imprégnées de résine thermodurcissable, l'ensemble étant pressé et polymérisé par chauffage dans un premier moule, puis à empiler plusieurs nappes unitaires en disposant des cales d'extrémités, également en nappes de tissus de fibres imprégnées de résine, avec des couches intercalaires de colle, dans un second moule, ou moule d'assemblage, pour former un faisceau de baguettes régulièrement espacées, à injecter l'élastomère d'enrobage à l'état liquide ou visqueux dans ce faisceau, et enfin à vulcaniser l'élastomère, dont la qualité adoptée aura été choisie en fonction des caractéristiques d'élasticité et/ou d'amortissement qu'on veut lui attribuer.

Préalablement à la formation des nappes unitaires, chaque baguette aura été obtenue par circulation de filaments continus dans une machine d'imprégnation de résine, puis calibrage des filaments imprégnés et réunis entre eux, par passage dans une filière permettant d'obtenir un profilé de section désirée, et enfin par découpe du profilé à la longueur désirée.

Chaque extrémité rigide par laquelle les différentes nappes unitaires sont réunies, forme un bloc dans lequel pourront être percés deux alésages dans lesquels des douilles pourront être emmanchées et retenues par collage pour former des chapes de fixation de l'élément aux organes à raccorder à l'aide d'axes de fixation traversant les douilles. Mais au moins une extrémité rigide de l'élément peut être également réalisée en intercalant entre deux nappes unitaires voisines une couche de stratifils longitudinaux provenant d'un organe à raccorder, afin de former une attache en éclisse.

A l'emplanture de la partie centrale allongée, souple en flexion et torsion, dans chacune des extrémités rigides de l'élément, on peut prévoir une courte zone de transition, définie par un chambrage rempli par injection d'un élastomère moins souple que celui de la matrice dans la partie centrale, et ce second élastomère vient enrober les baguettes afin de réduire la rigidité de leur encastrement dans les zones d'emplanture dans les extrémités rigides, et donc le niveau de contrainte qu'elles subissent lorsque le bras de liaison est sollicité en flexion et/ou en torsion. L'utilisation de cales en forme de coins de part et d'autre de chaque extrémité rigide de l'empilement permet de réaliser un précalage en incidence, qui peut être nécessaire dans l'application d'un tel élément à partie centrale flexible et torsible comme bras de liaison mécanique entre l'ossature résistante d'une pale et un moyeu de rotor, afin de permettre la commande de la pale en incidence en autorisant ses mouvements en battement et trainée.

Dans cette application particulière, le brevet français n°2 041 747 précité propose des réalisations avantageuses de moyeux simplifiés ne comportant pas, au niveau de la liaison à chaque pale, les trois articulations classiques de pas, de battement et de trainée, tout en conservant un comportement très proche de celui des moyeux articulés, avec en outre l'avantage qu'un choix convenable de la rigidité en trainée associé à un amortissement suffisant assuré par la nature de l'élastomère d'enrobage, permettent la suppression de liaisons entre les pales et d' amortisseurs de trainée, en général nécessaires sur les moyeux articulés pour éviter les balourds à la mise en rotation ainsi que les phénomènes de résonance-sol, de résonance-vol ou de vibration de pale (phénomènes dit de "flutter").

Dans certaines de ces réalisations, les parties d'extrémités rigides les plus proches de l'axe de rotation du rotor sur les bras de liaison sont confondues en un seul bloc, rigidifié par la résine polymérisée d'imprégnation, et qui constitue le corps du moyeu, tandis que du côté des pales, les parties d'extrémités rigides correspondantes sont épaissies et constituées en forme de têtes aplaties par l'adjonction de renforts intercalaires, ces têtes pouvant être percées et munies de douilles de fixation de chapes doubles, pour la fixation aux pieds des pales correspondantes ainsi qu'aux leviers de commande du pas de ces pales.

Dans l'une de ces réalisations, lorsqu'il est nécessaire d'augmenter les caractéristiques d'amortissement structural que le bras de liaison possède déjà, mais à un degré insuffisant, par l'élastomère d'enrobage des baguettes du faisceau souple, il a été proposé de rapporter sur toute ou partie de la périphérie de la partie centrale allongée du bras de liaison, au moins une lame rigide dans le sens longitudinal, reliée à la partie centrale allongée par l'intermédiaire d'un élastomère semblable ou différent de celui utilisé pour l'enrobage des baguettes, ou encore d'un mastic adhésif à base de silicone, présentant à un degré élevé des propriétés de rémanence en déformation, génératrice d'amortissement structural. Cette lame n'est pas liée ou est liée par une extrémité seulement à l'une des parties d'extrémités rigides du bras de liaison et, dans le cas où plusieurs lames sont prévues et séparées l'une de l'autre par une couche de matière de liaison (élastomère ou mastic adhésif), ces lames ne sont pas liées ou sont liées chacune par une extrémité seulement à l'une alter nativement des deux parties d'extrémités rigides du bras. Ainsi, cette lame ou ces lames ne participent pas à l'allongement des baguettes immédiatement sous-jacentes dans le faisceau, au cours des déformations en flexion. La matière de liaison est ainsi soumise à des déformations en cisaillement qui créent, par rémanence à la déformation, les forces d'amortissement supplémentaires désirées.

Pour l'obtention de cet amortissement supplémentaire, cette réalisation fait une application particulière aux rotors de moyens généraux utilisables selon les enseignements du brevet des Etats-Unis d'Amérique n° 3 160 549 pour amortir des vibrations.

Ce brevet américain propose, en relation avec des panneaux de fuselage d'avion, choisis comme exemple de structure vibrante, une structure d'amortissement de vibration multicouche constituée d'un empilement alterné de couches d'une mousse caoutchouteuse, en polyuréthanne ou en caoutchouc de silicone, qui absorbe les vibrations, et de plaques rigides de retenue métalliques, les couches de mousse étant fixées sur les panneaux de base vibrants ou sur les plaques métalliques d'autres étages de l'empilement par des couches de revêtement d'un adhésif sensible à la pression, la structure d'amortissement étant externe aux panneaux vibrants bien que de préférence tournée vers l'intérieur du fuselage.

L'application d'une structure de base analogue à couche d'élastomère, pour l'amortissement des oscillations d'une pale de rotor d'hélicoptère, a été également proposée dans le brevet français n°2 336 299. Ce brevet français décrit un dispositif d'amortissement comportant au moins une couche de recouvrement, en un matériau de grande rigidité dans le sens de la force à amortir, et une couche d'amortissement en un matériau visco-élastique présentant un amortissement interne élevé, les deux couches étant superposées et assemblées à plat directement sur la pale, dans la zone de déformation dynamique de celle-ci, de sorte que la couche d'amortissement soit sollicitée en cisaillement lors des oscillations de la pale, qui sont ainsi amorties. Ce dispositif d'amortissement fait partie intégrante de la pale et en constitue un revêtement à plusieurs couches, faisant légèrement saillie en-dehors du profil de cette pale, dont il n'affecte pas sensiblement l'aspect extérieur, en particulier s'il est disposé dans un évidement ménagé dans la face externe de la pale, aux endroits appropriés, tels que l'extrados et/ou l'intrados du bord de fuite au niveau du pied de pale, ou d'une zone située à 7/10e de l'envergure, à partir du pied de pale. La ou chaque couche de recouvrement peut être raccordée à la pale sans possibilité de déplacement à une extrémité, afin d'obtenir des déformations en cisaillement aussi grandes que possible de la ou des couches d'amortissement, et, dans le cas où le dispositif est pourvu de plusieurs couches de recouvrement et d'amortissement se superposant alternativement, les couches de recouvrement se succédant sont raccordées par leurs extrémités opposées à la pale sans possibilité de déplacement. De plus, la couche de recouvrement externe peut être traversée par des entailles perpendiculaires au plan d'oscillation de la pale, pour empêcher un raidissement de la pale en cas de grande longueur axiale des couches du dispositif d'amortissement. Dans ce cas également, le dispositif d'amortissement constitué par un empilement stratifié et alterné de couches d'amortissement visco-élastiques en caoutchouc de silicone ou polyuréthane, et de couches de revêtement rigides, est externe à la pale, bien que logé éventuellement dans une chambre dans la face externe de cette pale, pour ne pas sortir trop sensiblement de son profil.

Un dispositif d'amortissement à couche d'élastomère de structure très voisine et également externe à l'organe à amortir est proposé dans le brevet des Etats-Unis d'Amérique n°4 334 825, pour le pied des pales d'un rotor non articulé d'hélicoptère,afin d'amortir les oscil lations de trainée. Ce dispositif comprend au moins deux plaques rigides fixées aux faces opposées du pied de pale par plusieurs éléments d'élastomère qui sont collés ou adhérisés d'une part à la plaque rigide correspondante et d'autre part au pied de pale, en étant espacés l'un de l'autre dans la direction de l'envergure de la pale, et l'amortissement résulte des sollicitations en cisaillement de ces éléments visco-élastiques.

Enfin, pour l'équipement d'un rotor sans palier ni articulation, et dont chaque pale est liée au moyeu par un bras souple en flexion et torsion, qui est soit la partie radiale interne du longeron traversant le pied de pale, soit un bras lié au moyeu et raccordé au longeron de pale dans son prolongement, le brevet des Etats-Unis d'Amérique n°4 332 525 décrit un amortisseur d'oscillation constitué d'un empilement alterné de couches métalliques et de couches d'élastomère (caoutchouc de silicone) sur chacune des deux faces planes du bras souple de section rectangulaire, et adhérisé entre la face plane correspondante du bras et l'intérieur de la portion de la coque rigide de la pale en regard. Dans ce cas, bien que l'amortisseur soit à l'intérieur de la coque de la pale, il est cependant à l'extérieur de l'élément de la pale qui se déforme dynamiquement, à savoir le bras souple reliant la pale au moyeu.

En conclusion, dans les quatre derniers brevets mentionnés ci-dessus, l'amortissement est toujours assuré par au moins une couche d'élastomère coopérant avec au moins une couche rigide et toujours placée à l'extérieur de l'élément déformable. De plus, l'amortissement assuré par ces dispositifs extérieurs à l'organe dont les déformations sont à amortir, n'est pas un amortissement complémentaire, mais le seul amortissement qui soit assuré.

Par l'invention, afin de permettre une adaptation en fréquence plus favorable à l'utilisation de certaines pales rigides sur les rotors principaux non articulés d'hélicoptère, on se propose d'augmenter l'amortissement intégré, et en particulier l'amortissement en traînée, assuré par un bras de liaison souple du type présenté ci-dessus et connu par les brevets français n°2 041 747 et 2 474 395, sans avoir à munir ce bras connu d'un dispositif externe désavantageux sur les plans du poids, de l'encombrement, et donc de la traînée aérodynamique, et de l'absence de protection vis-à-vis de l'environnement extérieur.

En d'autres termes, le problème à la base de l'invention consiste à donner à un bras de liaison souple, tel que connu par ces deux brevets français, une capacité d'amortissement venant en complément de celle qui lui est déjà donnée par l'élastomère d'enrobage des baguettes du faisceau, sans recourir à un dispositif extérieur, ou encore à augmenter l'amortissement interne structural d'un tel bras de liaison souple, et en particulier l'amortissement en traînée pour le cas d'application à la liaison des pales de rotor à leur moyeu, à l'aide de moyens simples et intégrés au bras de liaison.

A cet effet, le bras de liaison selon l'invention, du type déjà présenté ci-dessus et connu par les brevets français n°2 041 747 et n°2 474 395, se caractérise en ce que la partie allongée souple en flexion et torsion comprend également un noyau longitudinal d'amortissement comportant au moins une chambre longitudinale et étanche, interne au faisceau et remplie d'un fluide d'amortissement, et au moins un organe longitudinal de cisaillement, s'étendant dans chaque chambre et solidaire par l'une seulement de ses extrémités longitudinales d'une partie d'extrémité rigide du bras, de sorte que toute déformation de la partie allongée dans au moins une direction entraîne un amortissement complémentaire à celui assuré par l'élastomère d'enrobage, et obtenu par cisaillement du fluide entre le ou les organes de cisaillement et le faisceau composite qui l'entoure.

Avantageusement, lorsque le fluide d'amortissement est un produit présentant une faible tenue au fluage, au moins une chambre étanche du noyau d'amortissement, qui est remplie d'un tel produit d'amortissement, est au moins partiellement délimitée par une enveloppe étanche et souple, telle qu'une vessie en élastomère, afin de maintenir en utilisation le produit à faible tenue au fluage dans ladite enveloppe.

Avantageusement dans ce cas, le fluide d'amortissement est une huile ou un gel de silicone de haut poids moléculaire, non ou faiblement réticulée, d'aspect pâteux ayant une consistance intermédiaire entre un liquide et un solide élastiques, et présentant un comportement "pseudo-plastique" générant une forte dissipation énergétique sous sollicitation mécanique. En particulier, l'huile de silicone utilisée comme fluide d'amortissement est avantageusement choisie dans la classe des méthylpolysiloxanes, qui présentent d'excellentes caractéristiques de résistance aux efforts de cisaillement intenses et prolongés.

Dans une forme avantageuse de réalisation, qui permet un amortissement différentiel selon deux directions différentes de la section transversale de la partie centrale du bras de liaison, au moins un organe de cisaillement est une lame longitudinale souple en flexion perpendiculairement à son plan et en torsion autour de son axe longitudinal. Dans ce cas, afin de guider la course de cisaillement de la lame dans son plan, dans lequel elle est relativement rigide, l'extrémité longitudinale de la lame, du côté opposé à celle par laquelle la lame est solidaire d'une partie d'extrémité rigide du bras, est engagée librement dans un organe de guidage solidaire de l'autre partie d'extrémité rigide du bras. Pour permettre simultanément une meilleure course de cisaillement de la lame, sensiblement dans son plan, et une évolution favorable de la section transversale de la ou des lames et de la partie centrale du bras, en vue d'une application à la liaison des pales de rotor à leur moyeu, au moins une lame présente une forme sensiblement trapézoïdale à petite base tournée vers son extrémité longitudinale libre. Afin de favoriser le comportement en flexion, perpendiculairement à son plan, et en torsion, autour de son axe longitudinal, et simultanément d'augmenter sa rigidité, dans son plan et perpendiculairement à son axe longitudinal, au moins une lame, et de préférence chacune d'elles, est réalisée en matériau composite et est de préférence constituée d'un faisceau plat de stratifils sensiblement unidirectionnels de fibres synthétiques ou minérales qui sont agglomérées par une résine synthétique d'imprégnation polymérisée et rigide.

Avantageusement, afin d'obtenir une distribution équilibrée des sollicitations externes, des contraintes internes et des réactions, de part et d'autre de la ou des lames du noyau d'amortissement, les baguettes du faisceau composite de baguettes et d'élastomère d'enrobage sont sensiblement réparties en deux moitiés situées respectivement de part et d'autre du noyau d'amortissement et en regard des faces planes de la ou des lames de ce dernier.

Dans une forme simple de réalisation, le noyau d'amortissement comprend une seule lame de cisaillement, dont l'extrémité longitudinale solidaire d'une partie d'extrémité rigide du bras est d'une seule pièce avec une embase surépaisse d'encastrement dans ladite partie d'extrémité rigide, tandis que l'extrémité longitudinale libre de la lame est engagée à coulissement dans une fente de guidage ménagée dans un bloc de guidage et d'encastrement dans l'autre partie d'extrémité rigide du bras, ledit bloc étant sensiblement de même épaisseur que l'embase, et une enveloppe étanche et souple, en forme de manchon, relie l'embase au bloc de guidage en fermant de manière étanche autour de la lame une unique chambre remplie du fluide d'amortissement. Le noyau d'amortissement peut ainsi être réalisé sous la forme d'un ensemble préconstitué qui est ensuite intégré dans l'empilage des nappes unitaires préparées par exemple selon les enseignements du brevet français 2 474 395, pour constituer le squelette du bras de liaison souple, puis le noyau d'amortissement est emprisonné dans l'élastomère d'enrobage des baguettes coulé ou injecté dans l'empilage pour être vulcanisé et compléter le faisceau composite souple.

Mais, en fonction du niveau d'amortissement désiré, le noyau d'amortissement peut également comporter plusieurs lames. En particulier, il peut comprendre un empilement non jointif de plusieurs lames sensiblement parallèles et écartées les unes des autres à l'intérieur d'une unique chambre remplie du fluide d'amortissement et fermée par une unique enveloppe étanche et souple. Dans ce cas, il est possible que les extrémités longitudinales par lesquelles les lames sont solidaires d'une partie d'extrémité rigide du bras, soient chacune d'une seule pièce avec une embase surépaissie d'encastrement alternativement dans l'une ou l'autre desdites parties d'extrémités rigides du bras. De plus, les extrémités longitudinales des lames qui sont solidaires d'une même partie d'extrémité rigide du bras peuvent être d'une seule pièce avec une unique embase massive d'encastrement dans ladite partie d'extrémité rigide du bras. En outre, il est possible qu'au moins une embase d'encastrement dans une partie d'extrémité rigide du bras puisse constituer simultanément un bloc de guidage, présentant au moins une fente de guidage dans laquelle est engagée à coulissement l'extrémité longitudinale libre d'une lame dont l'autre extrémité longitudinale est solidaire d'une embase d'encastrement dans l'autre partie d'extrémité rigide du bras.

Conformément aux enseignements du brevet français 2 042 747, il est avantageux que les baguettes du faisceau composite soient prolongées de part et d'autre de la partie centrale allongée et soient, d'un côté au moins de cette dernière, agencées en nappes de baguettes superposées en empilage alterné avec des renforts intercalaires d'armature en plaques relativement rigides et/ou couches de tissus de fibres minérales ou synthétiques, l'empilage étant aggloméré par une résine synthétique d'imprégnation et/ou d'enrobage polymérisée et rigide, pour former au moins une partie d'extrémité rigide du bras, et dans ce cas, selon une caractéristique propre à l'invention, il est de plus avantageux qu'au moins une embase d'encastrement et/ou au moins un bloc de guidage d'une lame soient intercalés et intégrés dans ledit empilement alterné. Pour améliorer encore l'intégration dans la partie d'extrémité rigide correspondante, lorsque le bras de liaison comporte au moins un organe de guidage, il est avantageux que ce dernier comprenne au moins deux plaques rigides, sensiblement parallèles, intégrées dans l'empilage aggloméré formant la partie d'extrémité rigide correspondante du bras, et séparées l'une de l'autre par au moins une couche intercalaire de l'empilage, les deux plaques de l'organe de guidage faisant saillie dans la chambre interne au faisceau afin de délimiter entre elles au moins une fente de guidage d'une lame de cisaillement.

L'invention a également pour objet un rotor multipale, dont chacune des pales est reliée au moyeu du rotor par un bras de liaison propre à l'invention et tel que défini ci-dessus, dont les deux parties d'extrémités rigides sont raccordées l'une au pied de la pale correspondante et l'autre au moyeu.

Dans le cas d'un rotor multipale à pas variable et constituant au moins une partie de la voilure tournante d'un aérodyne, il est simultanément avantageux, pour augmenter l'amortissement en trainée, sans augmenter trop sensiblement les efforts de commande de changement de pas, que la ou les lames du noyau d'amortissement de chaque bras de liaison soient sensiblement parallèles au plan de rotation du rotor. Afin d'obtenir une réponse dynamique plus favorable du bras souple en battement, il est en outre avantageux que, d'une part, la section transversale de la partie centrale allongée de chaque bras de liaison et, d'autre part, la largeur d'au moins une lame du noyau d'amortissement de chaque bras de liaison, diminuent progressivement de la partie d'extrémité rigide du bras qui est raccordée au moyeu vers celle qui est raccordée à la pale. Pour obtenir l'évolution favorable de la section transversale, il est possible que la largeur maximum de la partie centrale allongée de chaque bras de liaison, mesurée perpendiculairement à son axe longitudinal et sensiblement dans le plan de rotation du rotor, reste constante alors que son épaisseur, mesurée sensiblement perpendiculairement audit plan de rotation, diminue progressivement de la partie d'extrémité rigide raccordée au moyeu vers celle raccordée à la pale.

D'une manière générale, dans un rotor selon l'invention, la partie centrale allongée de chaque bras de liaison présente une section transversale de forme sensiblement ovale, de grand axe situé sensiblement dans le plan du rotor, ou polygonale, en particulier octogonale, à deux grands côtés parallèles l'un à l'autre et sensiblement au plan du rotor.

L'invention a enfin pour objet un moyeu de rotor, du type comportant un corps central rigide, destiné à être solidaire en rotation d'un mât rotor autour d'un axe de rotation du rotor, et des bras sensiblement radiaux, en nombre égal au nombre des pales du rotor, et reliant chacun une pale au corps de moyeu, et, selon l'invention, ce dernier se caractérise en ce que les bras radiaux sont des bras de liaison conformes à l'invention et tels que définis ci-dessus, dont les parties d'extrémités rigides destinées à être raccordées chacune à une pale correspondante sont conformées en organes de reprise de pale, tels que des chapes, alors que les autres parties d'extrémités rigides des bras sont intégrées au corps de moyeu.

L'invention sera mieux comprise, et d'autres avantages et caractéristiques de l'invention ressortiront, à la lecture de la description donnée ci-dessous, à titre non limitif, de plusieurs exemples de réalisation décrits en référence aux dessins annexés sur lesquels :

la figure 1 est une vue schématique en coupe longitudinale par un plan vertical d'un bras de liaison radial d'un moyeu "non articulé" d'hélicoptère, représenté en position déformée en battement,

la figure 2 est une vue schématique en coupe transversale selon II-II du bras de liaison de la figure 1,

la figure 3 est une vue de dessus du moyeu "non articulé" avec arrachement partiel au niveau de la partie centrale souple du bras de liaison de la figure 1, pour mieux représenter sa structure interne,

la figure 4 est une vue schématique en coupe longitudinale d'un noyau d'amortissement à une seule lame de cisaillement utilisable dans le bras souple de la figure 1,

la figure 5 est une vue analogue à la figure 4 d'un noyau d'amortissement à trois lames de cisaillement,

la figure 6 est une vue schématique de dessus analogue à la figure 3, d'un bras de liaison souple d'un second exemple de moyeu non articulé, et

les figures 7 et 8 sont des vues schématiques en coupe respectivement transversale selon VII-VII et longitudinale selon VIII-VIII du bras de liaison de la figure 6.

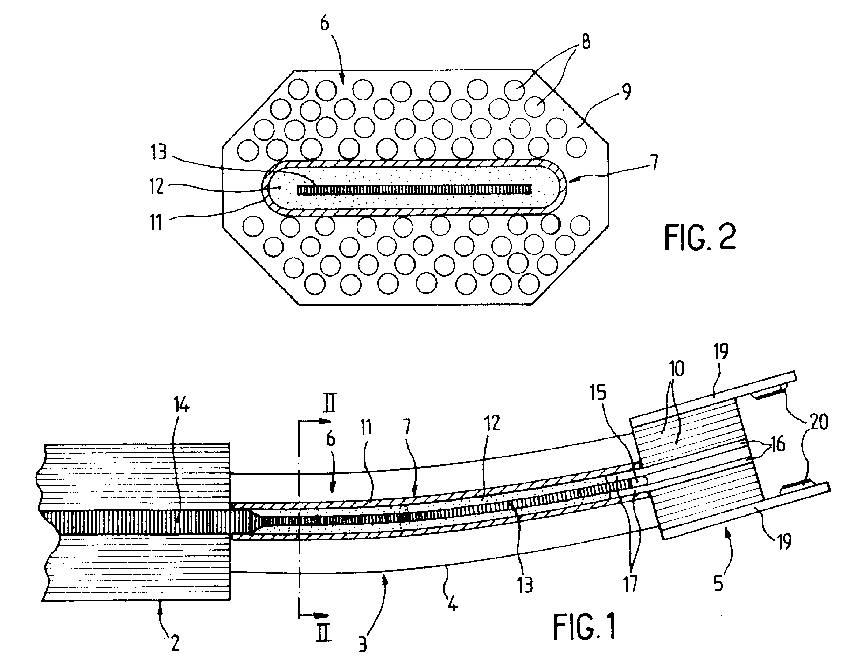

En référence aux figures 1 à 3, le moyeu "non articulé", désigné dans son ensemble par la référence 1, comprend un corps central 2 et plusieurs bras sensiblement radiaux 3, dont chacun est destiné à relier une pale (non représentée) du rotor au moyeu 1. Chaque bras de liaison 3 comporte une partie centrale allongée 4, qui est souple en torsion et flexion, et qui s'étend sensiblement radialement entre deux parties d'extrémités rigides, dont l'une, en position radiale interne, est directement intégrée aux parties d'extrémités rigides radiales internes des autres bras de liaison 3 pour former le corps central 2 du moyeu, tandis que l'autre partie d'extrémité rigide 5, en position radiale externe, est conformée en chape de reprise de la pale correspondante.

La partie centrale allongée 4 comprend un faisceau composite ternaire 6, réalisé conformément aux enseignements des brevets français n° 2 041 747 et n° 2 174 395, à la différence essentielle près qu'il est réalisé en faisceau périphérique entourant un noyau longitudinal d'amortissement 7 ainsi intégré au centre du faisceau 6. On rappelle que ce dernier, comme représenté sur la figure 2, comprend un réseau de baguettes 8, parallèles et espacées les unes des autres, ayant une forte résistance mécanique notamment en traction, présentant une certaine élasticité en flexion, et dont chacune est par exemple obtenue par le groupement parallèle d'un très grand nombre de fils et/ou filaments continus d'une matière minérale, telle que le verre ou le carbone, ou synthétique, telle que des fibres aramides, notamment celles commercialisées sous le nom de "KEVLAR", (marque déposée), et qui sont enrobés dans une résine thermodurcissable de type époxyde par exemple, de sorte que ces fils ou filaments occupent de 50 à 80 % du volume de chaque baguette 8, le reste étant occupé par la résine et son durcisseur. Bien que sur la figure 2 la section transversale des baguettes soit circulaire, il est clair que ces baguettes peuvent présenter toute autre section souhaitable, par exemple aplatie ou ovale, ou même polygonale, en particulier rectangulaire, triangulaire ou hexagonale. Pour cette raison, il est préférable que chaque baguette 8 soit réalisée par un assemblage profilé de stratifils de fibres et/ou filaments de la matière minérale ou synthétique choisie. A cet effet, on fait circuler les stratifils continus dans une machine d'imprégnation contenant la résine thermodurcissable, puis on calibre les stratifils imprégnés et réunis côte en côte en les faisant passer dans une filière pour obtenir un profilé ayant la section désirée, et enfin on découpe le profilé en baguettes 8 ayant la longueur souhaitée. En raison de leur résistance mécanique élevée et de leur module d'élasticité qui est comparativement d'une valeur relativement faible, les baguettes présentent une certaine souplesse en flexion. Dans la partie centrale 4 du bras souple 3, ces baguettes 8 sont individuellement enrobées par un élastomère vulcanisé et souple 9, qui agglomère et assemble les baguettes 8 en formant le faisceau 6, dont environ 25 à 50 % en volume est occupé par cet élastomère 9, le reste étant occupé par les baguettes 8. Lorsque ces dernières présentent une section triangulaire ou hexagonale, on peut diminuer la proportion de l'élastomère 9 dans le faisceau 6. Cet élastomère 9 est à base de silicone ou de polyuréthane, et présente un module de cisaillement assez faible, de façon à permettre des petits déplacements relatifs des baguettes 8 lorsque le bras 3 est déformé en flexion et torsion. De plus, il présente une rémanence notable aux déformations, de sorte que tout travail de déformation s'accompagne d'une transformation d'énergie en chaleur, ce qui se traduit par un amortissement dynamique des mouvements auxquels le bras souple 3 est soumis. L'élastomère d'enrobage 9 est déformable mais pratiquement incompressible : il en résulte qu'une déformation imposée à la partie centrale allongée 4 du bras se traduit par une différence de longueur de certaines au moins des baguettes 8, accompagnée d'une distorsion de l'élastomère 9. Ce dernier permet un déplacement relatif des baguettes 8 voisines, tout en présentant une ténacité suffisante pour n'autoriser qu'une faible variation de la position relative de l'axe des baguettes, ce qui permet au faisceau 6 de travailler comme un seul corps composite pendant ses déformations en flexion et torsion. Dans ce faisceau 6, les baguettes 8 enrobées par l'élastomère 9 retiennent ce dernier et l'emprisonnent, sauf dans la partie immédiatement à la périphérie du faisceau 6, en constituant une sorte de frette pour l'élastomère 9, de sorte que celui-ci ne peut s'échapper du faisceau 6 ni se rompre par distension ou écrasement. Cet effet de frettage peut être renforcé en entourant le faisceau 6 par une gaine déformable mais inextensible. La surface latérale des baguettes 8 peut être préparée pour favoriser l'adhérence sur ces dernières de l'élastomère souple et vulcanisé 9, dans lequel les baguettes sont noyées et qui assure leur assemblage ou agglomération en un seul faisceau composite ternaire 6.

Pour assurer un bon raccordement de la partie centrale souple 4 aux parties d'extrémités rigides 2 et 5 de chaque bras de liaison 3, les baguettes 8 de son faisceau 6 se prolongent, de part et d'autre de la partie centrale 4, dans les parties rigides 2 et 5, qui sont renforcées par des armatures complémentaires, constituées de plaques rigides métalliques ou composites et/ou de couches de tissus de fibres, par exemple de verre. De la sorte, chaque partie d'extrémité rigide 2 ou 5 est formée d'un bloc stratifié constitué par un empilement alterné de couches 10 parallèles comprenant des nappes de tissus de fibres, qui prennent en sandwich les extrémités des baguettes 8 des nappes unitaires empilées pour constituer le faisceau 6 lorsque ce dernier est réalisé par le procédé selon le brevet français 2 474 395, des plaques et/ou couches de tissus de fibres de renfort intercalaires, et également, sensiblement au milieu de chaque empilement, au moins un élément plat et rigide d'encastrement d'une extrémité longitudinale du noyau d'amortissement 7, comme décrit plus précisément ci-dessous, l'ensemble de chaque empilement étant aggloméré et rigidifié par une résine thermodurcissable d'imprégnation ou d'enrobage des différentes couches 10 constitutives, dont la rigidité est beaucoup plus grande que celle de l'élastomère 9 d'enrobage des baguettes 8 dans la partie centrale 4, cette résine étant par exemple une résine du type époxyde, éventuellement identique à celle utilisée pour agglomérer les stratifils lors de la formation des baguettes 8.

Il est essentiel que la résine d'agglomération des empilages des blocs d'extrémités 2 et 5 soit une matière rigide polymérisée à coefficient de cisaillement très élevé afin d'introduire et de répartir dans les baguettes 8 les charges provenant de la pale liée au bloc radial externe 5 ou du corps de moyeu 2 auquel le bloc radial interne est directement intégré.

Dans l'exemple représenté sur la figure 2, les nappes de baguettes 8 du faisceau 6 sont réparties symétriquement par rapport au plan médian parallèle au plan du rotor, de part et d'autre d'une poche centrale longitudinale et de forme oblongue en direction transversale, qui est formée dans l'élastomère d'enrobage 9 et occupée par le noyau d'amortissement 7, et l'évolution du nombre des baguettes 8 dans les différentes nappes est telle que le faisceau 6 présente une section transversale en forme d'octogone irrégulier, dont les deux côtés opposés et parallèles au plan du rotor ont une longueur qui est plus du double de celle des autres côtés, ce qui donne à la section du faisceau 6 une forme globalement ovale, ayant son grand axe parallèle au plan du rotor et son petit axe perpendiculaire à ce plan, ce qui permet une flexion plus facile dans la direction du battement des pales (perpendiculairement au plan rotor) que dans la direction de la trainée (dans le plan du rotor) des pales, et ce qui permet simultanément de diminuer la rigidité en torsion par rapport à une section circulaire.

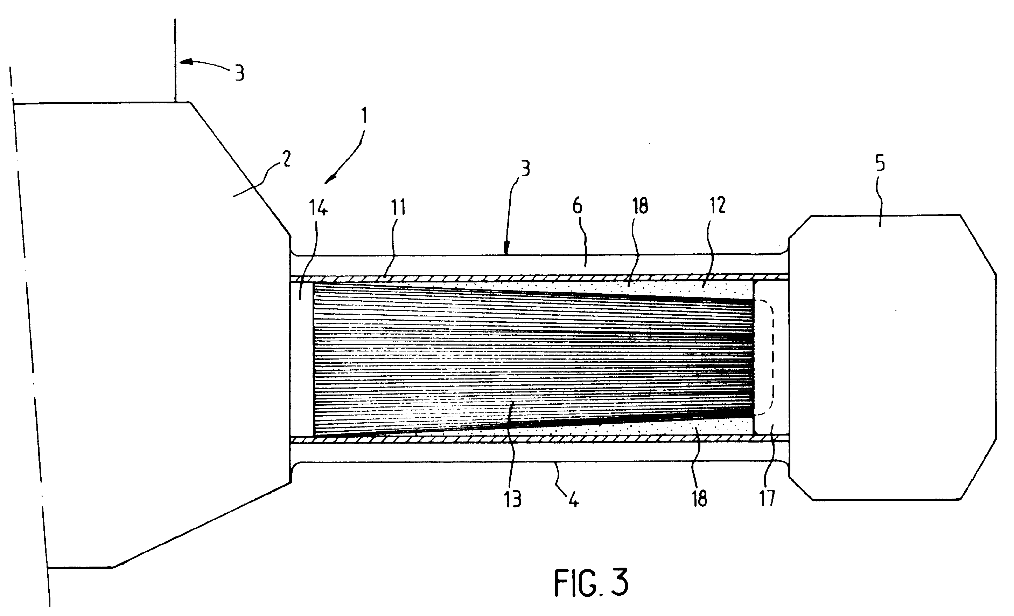

Le noyau d'amortissement 7 comprend une vessie souple et étanche 11, en élastomère, qui délimite à l'intérieur du faisceau 6 une chambre interne et étanche remplie d'un fluide amortissant 12 entourant lui-même une lame longitudinale 13. Cette lame 13, de forme en plan trapézoïdale (voir figure 3) à grande base tournée vers le corps de moyeu 2 et à petite base tournée vers le bloc rigide d'extrémité conformé en chape 5 de reprise de la pale, est une lame en composite, constituée par exemple d'un faisceau plat de stratifils unidirectionnels de KEVLAR (marque déposée) agglomérés par une résine synthétique d'imprégnation polymérisée, de sorte que cette lame 13 est relativement souple en flexion, perpendiculairement à son plan moyen sensiblement confondu avec le plan médian du faisceau 6 et le plan du rotor, et souple en torsion autour de son axe longitudinal, confondu sensiblement avec celui du bras de liaison 3, ce qui permet à la lame 13 de suivre les oscillations de battement et les mouvements de changement de pas subis par la chape 5 d'attache à la pale correspondante. Par sa grande base, la lame 13 est solidaire d'une embase 14 sensiblement plate, également en composite, surépaissie par rapport à la lame 13, et qui est intercalée et agglomérée rigidement dans l'empilage constitutif du corps de moyeu 2 pour assurer l'encastrement de la lame 13 par son extrémité longitudinale la plus large. Au contraire, l'extrémité longitudinale la moins large de la lame 13, au niveau de sa petite base, est une extrémité libre engagée de façon à pouvoir coulisser librement dans une fente de guidage 15 qui est délimitée entre des portions d'extrémités 17, faisant saillie dans la vessie 11, de deux plaques rigides et parallèles 16 qui sont intercalées et agglomérées rigidement dans l'empilage constitutif du bloc d'extrémité rigide 5, en étant séparées l'une de l'autre par quelques couches 10 de cet empilage, de façon à assurer un encastrement dans ce bloc 5 de l'organe de guidage ainsi réalisé pour l'extrémité libre de la lame 13.

Le fluide amortissant 12 utilisé est une huile ou un gel de silicone du type comprenant des chaînes moléculaires linéaires constituées d'éléments formés d'atomes de silicium et d'oxygène alternés ,et plus précisément de la classe des méthylpolysiloxanes, qui présentent un ensemble exceptionnel de propriétés, dues à leur structure moléculaire, telles que des propriétés de surface caractéristiques d'hydrophobie et d'anti-adhérence, des propriétés de résistance à haute et basse température, à l'oxydation et à l'hydrolyse, une grande inertie chimique (aucun risque de corrosion), une non-miscibilité avec nombre de produits organiques, une compressibilité élevée et une faible variation de la viscosité sous l'influence de la température, et surtout une remarquable résistance aux efforts de cisaillement intenses et prolongés, d'où leur utilisation comme fluides d'amortissement. Ce fluide est donc un matériau à haut poids moléculaire, non ou faiblement réticulé, qui se présente physiquement sous la forme d'un gel pâteux de consistance intermédiaire entre un liquide et un solide élastique, et il présente un comportement "pseudo-plastique" aux taux de cisaillement élevés. Sous sollicitation mécanique, il produit une forte dissipation d'énergie sous forme de chaleur. L'enveloppe étanche 11 assure la rétention de ce produit, qui présente une faible tenue au fluage. A titre d'exemple, le fluide utilisé est un gel de silicone commercialisée par la Société Rhône-Poulenc sous la référence RP771, sans agent de réticulation, c'est-à-dire ne pouvant pas être vulcanisée. Il est à noter que ce matériau, sous forme vulcanisée, est utilisé pour la fabrication d'élastomère visco-élastique. Ce gel amortissant offre de bonnes caractéristiques de résistance aux efforts de cisaillement intenses et prolongés avec une gamme de modules de cisaillement dissipatif "G" allant pratiquement de 0,03 MégaPascal à 0,1 MégaPascal.

Le noyau d'amortissement 7 ainsi constitué, d'une structure très simple, facile à réaliser et à intégrer dans le faisceau 6, et les blocs d'extrémités rigides 2 et 5, assurent, lors des déformations en traînée du bras 3, c'est-à-dire lorsque la chape 5 est déplacée avec le pied de pale correspondant dans le plan du rotor, ou dans le plan de la lame 13, par rapport au corps de moyeu 2, un amortissement efficace par cisaillement du gel amortissant 12 entre la lame 13, solidaire du corps de moyeu 2, et l'enveloppe en élastomère 11 qui suit les déformations en traînée du faisceau 6 du bras 3. Par contre, lors des déformations en battement du bras 3, perpendiculairement au plan de la lame 13, ou en torsion autour de son axe longitudinal, la lame 13 n'assure aucun cisaillement notable du gel amortissant 12, mais elle ne s'oppose non plus de manière notable aux déformations dans ces directions du faisceau 6.

D'une manière générale, les différents déplacements relatifs des blocs d'extrémités rigides 2 et 5, donc du pied de la pale correspondante par rapport au moyeu 1, sont permis par la déformation de la partie centrale allongée 4, dans le faisceau 6 de laquelle les baguettes 8 varient élastiquement en longueur, tandis que l'élastomère d'enrobage 9 subit une distorsion élasto-plastique, cet élastomère 9 étant suffisamment souple pour permettre une torsion, autour de l'axe longitudinal du bras, d'un angle convenable pour la commande nécessaire en pas de la pale, et entraînant un allongement avec conformation hélicoïdale des baguettes 8 périphériques du faisceau 6 par rapport aux baguettes 8 plus centrales, à proximité immédiate du noyau d'amortissement 7, et avec un déplacement relatif des baguettes périphériques par rapport aux baguettes les plus centrales. La rémanence en déformation de l'élastomère d'enrobage 9 assure dans ces conditions un amortissement des mouvements auxquels la partie centrale souple 4 du bras 3 est soumise, à raison des déplacements qui sont imposés à la chape 5 par la pale, et à cet amortissement interne lié à la présence et à la nature de l'élastomère d'enrobage 9, s'ajoute un amortissement interne complémentaire, résultant du cisaillement du gel amortissant 12 par la lame 13, lorsque le bras 3 est déformé en traînée.

Par un dimensionnement et un choix appropriés des formes du bras de liaison 3, et en particulier de sa partie centrale souple 4, en section et selon l'envergure (en direction longitudinale), on peut ainsi associer une rigidité convenable en traînée à un amortissement suffisant en battement et en torsion, assuré par l'élastomère 9, et adapté en traînée par les effets combinés de l'élastomère 9 et du noyau d'amortissement 7, ce qui permet de supprimer les liaisons interpales et les amortisseurs de traînée de tous types,articulés chacun entre, d'une part, une pale correspondante et, d'autre part, le moyeu.

Bien entendu, le dimensionnement de la lame 13, l'évolution de sa largeur et, éventuellement, de son épaisseur, et donc des volumes en forme de coins 18 occupés par le gel 12 entre l'enveloppe 11 et la lame 13 du côté de sa petite base, ainsi que l'évolution de la section transversale de la partie centrale souple 4, depuis le corps de moyeu 2 jusqu'à la chape 5, participent également à la détermination des réponses en fréquence du bras souple 3 aux diverses sollicitations qui lui sont imposées. De plus, pour permettre un positionnement plus favorable des axes fictifs de battement et de trainée de la pale par rapport à l'axe de rotation du rotor, ou axe central du corps du moyeu 2, il peut être souhaitable de diminuer progressivement la surface de la section transversale de la partie centrale souple 4, du corps de moyeu 2 vers la chape 5, la largeur du faisceau 6, mesurée perpendiculairement à son axe longitudinal et dans le plan du rotor, restant constante, et donc aussi la largeur du noyau d'amortissement 7, tandis que l'épaisseur du faisceau 6, mesurée perpendiculairement au plan de la lame 13, diminue progressivement, alors que l'épaisseur du noyau d'amortissement 7 reste également constante.

L'élastomère vulcanisable 9 et la résine thermodurcissable d'agglomération des stratifils en baguettes 8, qui respectivement, après réticulation et polymérisation, forment l'enrobage des baguettes 8 et lient ces dernières pour donner sa forme solide à la partie centrale 4 du bras de liaison 3, doivent être sans affinités, c'est-à-dire ne pas réagir chimiquement entre eux, ainsi qu'avec l'élastomère de la vessie 11, et ils doivent de plus avoir des températures de traitement compatibles entre elles et avec celle de la résine de liaison des empilages des blocs d'extrémités 2 et 5, pour permettre un traitement thermique unique dans un même moule pour la fabrication en une seule opération du bras de liaison 3 ou même de tout le moyeu 1 avec ses différents bras de liaison 3. En outre, les élastomères et résines utilisés doivent être imperméables à l'eau et insensibles aux agents atmosphériques pour assurer l'isolement et la protection des baguettes 8.

Pour compléter la description du bras de liaison 3 des figures 1 à 3, on peut ajouter que l'organe 5 de reprise du pied de pale correspondant, qui est un empilage rigidifié par une résine thermodurcissable de couches 10 et de plaques 16 de différentes natures, peut être aménagé en chape de différentes façons: comme représenté sur la figure 1, la chape peut être réalisée avec deux bras 19, en forme de plaques rigides, intégrées à l'empilage rigidifié l'une au-dessus et l'autre au-dessous du bloc ainsi formé, et présentant des extrémités en saillie par rapport à ce bloc, du côté opposé à la partie centrale 4, et qui sont percées de deux paires d'orifices en regard et coaxiaux, équipés de douilles 20 pour le passage d'axes de retenue du pied de pale ou d'une ferrure métallique en forme de chape double permettant elle-même la retenue du pied de pale et d'une seule pièce avec un levier de commande de pas. Mais le bloc d'extrémité rigide 5, qui est surépaissi par rapport à la partie centrale 4, et en forme de tête aplatie, notamment par l'adjonction des renforts intercalaires et des plaques 16, peut également être percé selon son épaisseur d'alésages garnis de douilles emmanchées et collées, pour le passage d'axes de fixation d'une chape double rapportée et assurant elle-même directement la retenue du pied de pale en étant solidaire du levier de commande de pas.

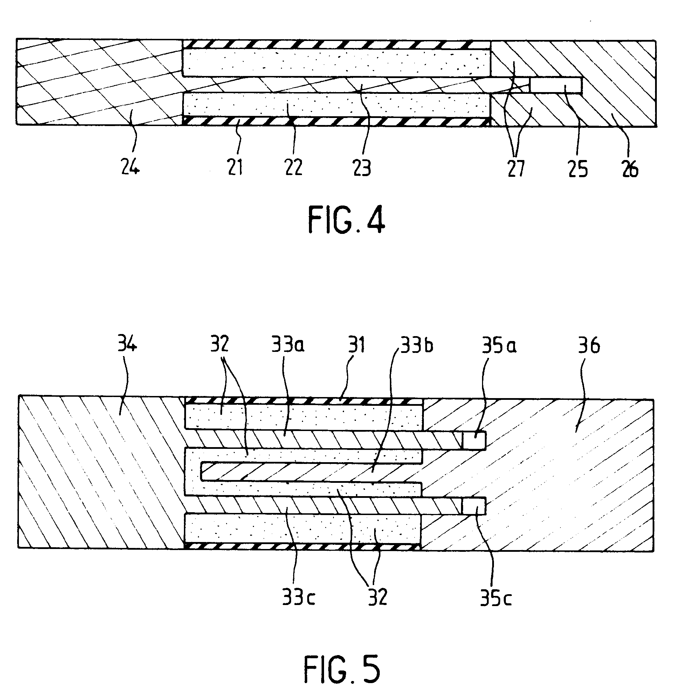

Sur la figure 4, on a schématiquement représenté un autre exemple de noyau d'amortissement, se présentant sous la forme d'un ensemble préassemblé, prêt à être combiné à un faisceau de baguettes enrobées, par exemple la place du noyau d'amortissement 7 du bras de liaison 3 des figures 1 à 3. Cet ensemble préconstitué comprend également une unique lame composite de cisaillement 23, dont une extrémité longitudinale est d'une seule pièce avec une embase composite et surépaissie 24, destinée à être encastrée dans l'une des parties d'extrémités rigides du bras. L'autre extrémité de la lame 23 est libre et engagée à coulissement dans la fente 25 délimitée entre deux parties 27 d'un organe de guidage composite 26, destiné à être encastré dans l'autre des parties d'extrémités rigides du bras, et la lame 23 est enrobée de gel amortissant 22 remplissant la chambre délimitée, autour de cette lame 23, entre les faces en regard de l'embase 24 et du bloc de guidage 26, et par la vessie souple et étanche d'élastomère 21. Ce noyau d'amortissement préconstitué est intégré dans l'empilage des nappes de baguettes 8, au cours de cet empilage, pour constituer le squelette du faisceau 6, puis le noyau d'amortissement est emprisonné dans l'élastomère, tel qu'un polyuréthane d'enrobage des baguettes 8, lorsque cet élastomère 9 est coulé ou injecté dans et autour du squelette.

Le noyau d'amortissement peut également comporter plusieurs lames de cisaillement, en fonction du niveau d'amortissement désiré, et un exemple d'un tel dispositif à trois lames est schématiquement représenté sur la figure 5.

Dans cet exemple, les trois lames de cisaillement 33a, 33b et 33c sont parallèles entre elles et espacées l'une de l'autre selon un empilement non jointif, et les lames 33a et 33c, les plus éloignées l'une de l'autre, sont toutes deux solidaires d'une même embase massive 34, par leurs extrémités longitudinales situées d'un même côté, tandis que leurs extrémités longitudinales du côté opposé sont libres et chacune reçue à coulissement dans l'une respectivement de deux fentes 35a et 35c ménagées dans un même bloc massif de guidage 36. Ce dernier constitue simultanément l'embase dont la lame centrale 33b est solidaire par son extrémité longitudinale du côté correspondant, tandis que l'autre extrémité longitudinale de cette lame 33b est libre et n'est pas engagée à coulissement dans une fente de l'embase massive 34, mais s'étend jusqu'à une faible distance de cette dernière. Les embases 34 et 36 sont destinées à être encastrées chacune dans l'une des deux parties rigides d'extrémités d'un bras souple, et, de préférence, l'embase 34 dans la partie raccordée ou intégrée au moyeu, et l'embase 36 dans la partie raccordée la pale correspondante. Dans cet exemple également, la vessie 31 en forme de manchon étanche et souple s'étend entre les deux embases 34 et 36 et ferme la chambre remplie du gel amortissant 32 entourant les lames 33a, 33b et 33c. L'amortissement est obtenu par cisaillement du gel 32 entre chacune des lames 33a et 33c, solidaires du corps de moyeu, et la lame 33b et l'enveloppe 31 qui suivent les déformations du faisceau de baguettes enrobées du bras souple, en partiticulier en trainée si les trois lames sont parallèles au plan de trainée du rotor.

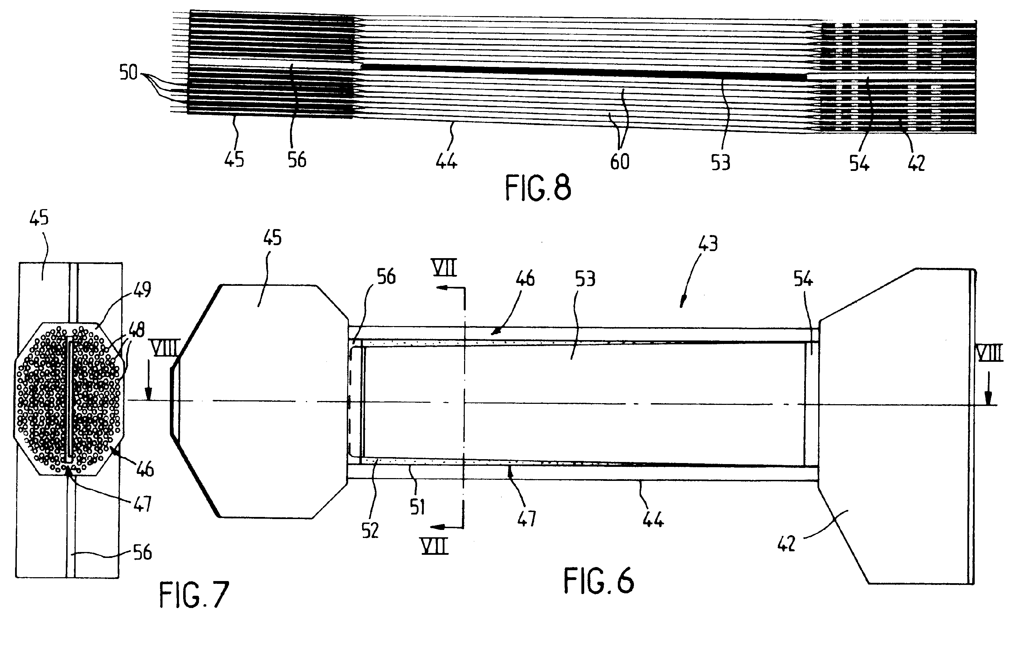

L'exemple de bras de liaison 43 représenté sur les figures 6 à 8 présente de nombreuses caractéristiques en commun avec celui décrit ci-dessus en référence aux figures 1 à 3. En effet, on retrouve une partie centrale souple 44, s'étendant entre deux parties rigides d'extrémités 42 et 45, et constituée d'un faisceau 46 de baguettes 48 individuellement enrobées dans un élastomère vulcanisé et souple 49, et d'un noyau d'amortissement 47, longitudinal, en position centrale, et entouré par le faisceau 46. Ce noyau 47 comprend, dans cet exemple également, une seule lame de cisaillement 53, de forme sensiblement trapézoïdale, solidaire par sa grande base d'une embase 54 encastrée dans la partie rigide d'extrémité 42, et dont la petite base forme une extrémité libre engagée à coulissement dans une fente d'un organe de guidage 56 encastré dans l'autre partie rigide d'extrémité 45, la lame 53 s'étendant dans un gel amortissant 52 remplissant une chambre délimitée à l'intérieur du faisceau 46 par une vessie souple et étanche 51. Dans cet exemple également, la section transversale de la partie souple 44 est en forme d'octogone dont deux côtés parallèles aux faces en regard de la lame 53 et au plan de trainée du rotor sont plus grands que les autres côtés, et le faisceau 46 est réparti en deux moitiés symétriques de part et d'autre du noyau d'amortissement 47. Mais, dans cet exemple, le faisceau 46 comprend un nombre bien plus grand de baguettes 48, dont chacune a une section transversale plus faible que celle des baguettes 8 du faisceau 6 de l'exemple des figures 1 à 3, et le faisceau 46 est obtenu par empilage d'un plus grand nombre de nappes de baguettes 48, dont chaque nappe comprend un plus grand nombre de baguettes 48, comme cela résulte clairement de la comparaison des figures 2 et 7. Sur la figure 8, on a schématisé l'empilement des nappes 60 de baguettes 48 enrobées, de part et d'autre du noyau d'amortissement 47, et formant le faisceau 46 dont l'épaisseur diminue progressivement de l'une des parties d'extrémités rigides 42 à l'autre 45. Ces parties 42 et 45 sont des blocs massifs en forme de têtes aplaties, constitués chacun par un empilement alterné des extrémités des nappes 60 pincées et écrasées en sandwich entre des couches de tissus de fibres , et de couches intercalaires de renfort 50, également en tissus de fibres, avec encastrement de l'embase 54 ou de l'organe de guidage 56 au centre de l'empilement correspondant, qui est lié par une résine thermodurcissable d'enrobage et/ou d'imprégnation polymérisée. On constate que les épaisseurs des blocs rigides 42 et 45 sont respectivement légèrement plus et moins importantes que l'épaisseur des extrémités respectivement adjacentes du faisceau 46, et chaque bloc 42 ou 45 est aménageable en chape pour le raccordement respectivement au moyeu et au pied de la pale correspondante, par perçage d'alésages garnis de douilles ou de bagues de passage d'axes de liaison.

Comme précédemment, la partie centrale 44 du bras de liaison 43 présente une section évolutive, dont la surface est plus importante vers le moyeu que vers la pale, de sorte que l'on peut ainsi mieux ajuster les fréquences propres d'oscillation de la pale et l'évolution des contraintes. De plus, la section sensiblement ovale de cette partie centrale 44 peut présenter son plus grand axe incliné légèrement sur le plan du rotor, du même angle que le pied de la pale correspondante, de sorte que les axes principaux d'inertie des sections du bras et de la pale sont alors alignés, ce qui assure une meilleure continuité des rigidités de la pale et du moyeu, favorables au comportement dynamique du rotor, et ce qui simplifie simultanément la réalisation du levier de commande du pas de la pale.

Dans ces différents exemples de réalisation, on constate que la simplicité et le gain d'encombrement obtenus conduisent à une réduction importante du poids, une meilleure finesse aérodynamique, et à une fabrication relativement facile et peu coûteuse de moyeux non articulés équipés de tels bras de liaison.

## Revendications

1. Bras de liaison, destiné à relier deux corps relativement rigides, tels qu'une pale de rotor et un moyeu (1), en permettant des déplacements relatifs limités de ces corps équivalant à des rotations autour d'au moins un axe, et, de préférence, autour de trois axes orthogonaux deux à deux, et comportant, entre deux parties d'extrémités rigides (2,5), destinées à être chacune rattachées, ou au moins partiellement, intégrées à l'un des corps, une partie centrale allongée (4), souple en flexion et torsion, assurant avec amortissement un rappel élastique vers une position moyenne de repos des deux corps, et qui comprend un faisceau composite longitudinal (6) de baguettes (8) sensiblement unidirectionnelles, de forte résistance mécanique, en particulier à la traction, dont chacune présente une certaine élasticité et est formée par agglomération d'un grand nombre de fibres et/ou filaments minéraux ou synthétiques par une résine synthétique d'imprégnation polymérisée, chaque baguette (8) étant individuellement enrobée d'un élastomère vulcanisé souple (9), présentant un coefficient de cisaillement relativement faible et une rémanence notable en déformation, qui agglomère lesdites baguettes (8) formant ledit faisceau composite (6), caractérisé en ce que la partie allongée (4) comprend également un noyau longitudinal d'amortissement (7) comportant au moins une chambre longitudinale et étanche, interne au faisceau (6) et remplie d'un fluide d'amortissement (12), et au moins un organe longitudinal de cisaillement (13) s'étendant dans chaque chambre et solidaire, par l'une seulement de ses extrémités longitudinales, d'une partie d'extrémité rigide (2) du bras (3), de sorte que toute déformation de la partie allongée (4) dans au moins une direction entraîne un amortissement complémentaire à celui assuré par l'élastomère d'enrobage (9), et obtenu par cisaillement du fluide (12) entre le ou les organes de cisaillement (13) et le faisceau composite (6) qui les entoure.

2. Bras de liaison selon la revendication 1, caractérisé en ce qu'au moins une chambre étanche du noyau d'amortissement (7) est au moins partiellement délimitée par une enveloppe étanche et souple (11), telle qu'une vessie en élastomère.

3. Bras de liaison selon la revendication 2, caractérisé en ce que le fluide d'amortissement (12) est une huile ou un gel de silicone de haut poids moléculaire, non ou faiblement réticulée, d'aspect pâteux ayant une consistance intermédiaire entre un liquide et un solide élastique, et présentant un comportement pseudo-plastique générant une forte dissipation énergétique sous sollicitation mécanique.

4. Bras de liaison selon la revendication 3, caractérisé en ce que l'huile de silicone est choisie dans la classe des méthylpolysiloxanes.

5. Bras de liaison selon l'une des revendications 1 à 4, caractérisé en ce qu'au moins un organe de cisaillement est une lame longitudinale (13) rigide en flexion dans son plan mais souple en flexion perpendiculairement à son plan et en torsion autour de son axe longitudinal.

6. Bras de liaison selon la revendication 5, caractérisé en ce que l'extrémité longitudinale d'au moins une lame (13), du côté opposé à celle par laquelle ladite lame (13) est solidaire d'une partie d'extrémité rigide (2) du bras (3), est engagée librement dans un organe de guidage (16) solidaire de l'autre partie d'extrémité rigide (5) du bras (3).

7. Bras de liaison selon l'une des revendications 5 et 6, caractérisé en ce qu'au moins une lame (13) présente une forme sensiblement trapézoïdale à petite base tournée vers son extrémité longitudinale libre.

8. Bras de liaison selon l'une des revendications 5 à 7, caractérisé en ce qu'au moins une lame (13), mais de préférence chacune d'elles, est réalisée en matériau composite, et de préférence constituée d'un faisceau plat de stratifils sensiblement unidirectionnels de fibres synthétiques ou minérales qui sont agglomérés par une résine synthétique d'imprégnation polymérisée.

9. Bras de liaison selon l'une des revendications 5 à 8, caractérisé en ce que, dans le faisceau (6) de baguettes (8) et d'élastomère d'enrobage (9), les baguettes (8) sont sensiblement réparties en deux moitiés situées respectivement de part et d'autre du noyau d'amortissement (7) et en regard des faces planes de la ou des lames (13).

10. Bras de liaison selon l'une des revendications 6 à 9, caractérisé en ce que le noyau d'amortissement (7) comprend une seule lame de cisaillement (13), dont l'extrémité longitudinale solidaire d'une partie d'extrémité rigide (2) du bras (3) est d'une seule pièce avec une embase surépaissie (14) d'encastrement dans ladite partie d'extrémité rigide (2), tandis que l'extrémité longitudinale libre de la lame (13) est engagée à coulissement dans une fente de guidage (15) ménagée dans un bloc de guidage (16) et d'encastrement dans l'autre partie d'extrémité rigide (5) du bras (3), ledit bloc (16) étant sensiblement de même épaisseur que l'embase (14), et une enveloppe étanche et souple (11), en forme de manchon, relie l'embase (14) au bloc de guidage (16) en fermant de manière étanche autour de la lame (13) une unique chambre remplie du fluide d'amortissement (12).

11. Bras de liaison selon l'une des revendications 5 à 9, caractérisé en ce que le noyau d'amortissement comprend un empilement non jointif de plusieurs lames (33a, 33b, 33c) sensiblement parallèles et écartées les unes des autres, à l'intérieur d'une unique chambre remplie du fluide d'amortissement (32) et fermée par une unique enveloppe (31) étanche et souple.

12. Bras de liaison selon la revendication 11, caractérisé en ce que les extrémités longitudinales par lesquelles les lames (33a, 33b, 33c) sont solidaires d'une partie d'extrémité rigide du bras, sont chacune d'une seule pièce avec une embase (34, 36) surépaissie d'encastrement alternativement dans l'une ou l'autre desdites parties d'extrémités rigides du bras.

13. Bras de liaison selon les revendications 11 et 12, caractérisé en ce que les extrémités longitudinales des lames (33a, 33c) solidaires d'une même partie d'extrémité rigide du bras sont d'une seule pièce avec une unique embase massive (34) d'encastrement dans ladite partie d'extrémité rigide du bras.

14. Bras de liaison selon l'une des revendications 12 et 13, caractérisé en ce qu'au moins une embase (36) d'encastrement dans une partie d'extrémité rigide du bras constitue simultanément un bloc de guidage présentant au moins une fente de guidage (35a, 35c) dans laquelle est engagée à coulissement l'extrémité longitudinale libre d'une lame (33a, 33c) dont l'autre extrémité longitudinale est solidaire d'une embase (34) d'encastrement dans l'autre partie d'extrémité rigide du bras.

15. Bras de liaison selon l'une des revendications 10 à 14, dans lequel les baguettes (48) du faisceau composite (46) sont prolongées de part et d'autre de la partie centrale allongée (44) et sont, d'un côté au moins de cette dernière, agencées en nappes (60) de baguettes superposées en empilage alterné avec des renforts intercalaires (50) d'armature en plaques relativement rigides et/ou couches de tissus de fibres minérales ou synthétiques, l'empilage étant aggloméré par une résine synthétique d'imprégnation et/ou d'enrobage polymérisée pour former au moins une partie d'extrémité rigide (42, 45) du bras (43), caractérisé en ce qu'au moins une embase d'encastrement (54) et/ou au moins un bloc de guidage (56) d'une lame (53) est intercalé et intégré dans ledit empilement alterné (42,45).

16. Bras de liaison selon la revendication 15, caractérisé en ce qu'il comporte au moins un organe de guidage comprenant au moins deux plaques rigides (16), sensiblement parallèles, intégrées dans un empilage aggloméré formant une partie d'extrémité rigide (5) du bras (3) et séparées l'une de l'autre par au moins une couche intercalaire (10) de l'empilage, lesdites plaques (16) faisant saillie (17) dans la chambre interne au faisceau (6) afin de délimiter entre elles au moins une fente (15) de guidage d'une lame (13).

17. Rotor multipale, caractérisé en ce que chacune des pales du rotor est reliée au moyeu (1) du rotor par un bras de liaison (3) selon l'une des revendications 1 à 16, dont les deux parties d'extrémités rigides (2,5) sont raccordées l'une (5) au pied de la pale correspondante et l'autre (2) au moyeu (1).

18. Rotor multipale selon la revendication 17, à pas variable et constituant au moins une partie de la voilure tournante d'un aérodyne, caractérisé en ce que la ou les lames (13) de chaque bras de liaison (3) est ou sont sensiblement parallèles au plan du rotor.

19. Rotor multipale selon la revendication 18, caractérisé en ce que, d'une part, la section transversale de la partie centrale allongée (4) de chaque bras de liaison (3), et, d'autre part, la largeur d'au moins une lame (13) de chaque bras de liaison (3) diminuent progressivement de la partie d'extrémité rigide (2) raccordée au moyeu (1) vers celle (5) raccordée à la pale.

20. Rotor selon la revendication 19, caractérisé en ce que la largeur maximum de la partie centrale allongée (4) de chaque bras de liaison (3), mesurée perpendiculairement à son axe longitudinal et sensiblement dans le plan de rotation du rotor, reste constante alors que son épaisseur, mesurée sensiblement perpendiculairement audit plan de rotation, diminue progressivement de la partie d'extrémité rigide (2) raccordée au moyeu (1) celle (5) raccordée à la pale.

21. Rotor selon l'une des revendications 17 à 20, caractérisé en ce que la partie centrale allongée (4) de chaque bras de liaison (3) présente une section transversale de forme sensiblement ovale, de grand axe situé sensiblement dans le plan du rotor, ou polygonale, en particulier octogonale, à deux grands côtés parallèles l'un à l'autre et sensiblement au plan du rotor.

22. Rotor selon l'une des revendications 17 à 21 caractérisé en ce que la partie centrale allongée (4, 44) à section évolutive de chaque bras de liaison, présente son plus grand axe incliné légèrement sur le plan du rotor, du même angle que le pied de la pale correspondante.

23. Moyeu d'un rotor selon l'une des revendications 17 à 22, du type comportant un corps central rigide (2), destiné à être solidaire en rotation d'un mât rotor autour d'un axe de rotation du rotor, et des bras sensiblement radiaux (3), en nombre égal au nombre des pales du rotor, et reliant chacun une pale au corps de moyeu (2), caractérisé en ce que les bras sensiblement radiaux sont des bras de liaison (3) selon l'une des revendications 1 à 16, dont les parties d'extrémités rigides (5) destinées à être raccordées chacune à une pale correspondante sont conformées en organes de reprise de pale, tels que des chapes (5), alors que les autres parties d'extrémités rigides (2) des bras (3) sont intégrées au corps de moyeu (2).

**Patentansprüche**

1. Verbindungsarm zum Zusammenschluß von zwei relativ starren Körpern, wie zum Beispiel einem Rotorblatt und einer Rotornabe, der begrenzte Relativbewegungen dieser Körper, nämlich Rotationen um mindestens eine Achse, und vorzugsweise um drei jeweils paarweise orthogonale Achsen, zuläßt, und der ein zwischen zwei starren Endstücken (2, 5), welche zur Befestigung an, oder zur wenigstens teilweisen Integration mit einem der Körper vorgesehen sind, angebrachtes längliches Zentralteil (4) beinhaltet, das, gegen Biegung und Torsion nachgiebig, eine gedämpfte elastische Rückführung der Körper in ihre mittlere Ruhelage sicherstellt, und der aus einem länglichen Bündel (6) von im wesentlichen in einer Richtung verlaufenden Stäben (8) hoher mechanischer Festigkeit, vor allem gegen Zug, besteht, wobei jeder dieser Stäbe (8) eine gewisse Elastizität aufweist und durch Agglomeration einer Vielzahl von mineralischen und synthetischen und mit polymerisierendem Kunstharz getränkten Fasern und/oder Filamenten gebildet ist und jeweils von einem weichen vulkanisierten Elastomer (9) umgeben wird, das einen relativ schwachen Scherungskoeffizienten und eine beachtliche Verformungsremanenz aufweist und die das Bündel (6) bildenden Stäbe (8) zusammenhält, dadurch gekennzeichnet, daß das längliche Zentralteil (4) zusätzlich einen länglichen Dämpfungskern (7) beinhaltet, der wenigstens eine abgedichtete und mit einer Dämpfungsflüssigkeit (12) gefüllte längliche Kammer im Innern des Bündels (6), und wenigstens eine längliche Scherungsvorrichtung (13) aufweist, die sich durch jede Kammer erstreckt und nur mit einem seiner Längsenden mit einem starren Endstück (2) des Verbindungsarmes (3) fest verbunden ist, so daß jegliche Verformung des länglichen Zentralteiles (4) in wenigstens einer Richtung eine durch eine Scherung der Flüssigkeit (12) zwischen der oder den Scherungsvorrichtungen (13) und dem sie umgebenden Bündel (6) bewirkte Dämpfung hervorruft, welche die des einhüllenden Elastomers (9) ergänzt.

2. Verbindungsarm nach Anspruch 1, dadurch gekennzeichnet, daß wenigstens eine abgedichtete Kammer des Dämpfungskernes (7) wenigstens teilweise durch eine dichte und biegsame Umhüllung (11), wie zum Beispiel eine Elastomerblase, umgrenzt ist.

3. Verbindungsarm nach Anspruch 2, dadurch gekennzeichnet, daß die Dämpfungsflüssigkeit (12) ein nicht oder nur schwach vernetztes Silikon-Öl oder Silikon-Gel hohen Molekulargewichtes ist, das über eine zwischen einer Flüssigkeit und einem elastischen Körper anzusiedelnde teigige Konsistenz verfügt und durch sein pseudo-plastisches Verhalten unter mechanischer Belastung eine starke Energiedissipation bewirkt.

4. Verbindungsarm nach Anspruch 3, dadurch gekennzeichnet, daß das Silikon-Öl aus der Gruppe der Methylpolysiloxane gewählt wird.

5. Verbindungsarm nach einem der Ansprüche 1 bis 4, dadurch gekennzeichnet, daß wenigstens eine Scherungsvorrichtung eine längliche Lamelle (13) ist, welche in ihrer Ebene biegungssteif ist, jedoch weich gegen Biegung senkrecht zu ihrer Ebene und bei Verdrehung um ihre Längsachse.

6. Verbindungsarm nach Anspruch 5, dadurch gekennzeichnet, daß das Längsende wenigstens einer Lamelle (13), welches demjenigen Längsende, das die Lamelle mit einem starren Endstück (2) der Biegeplatte (3) verbindet, gegenüberliegt, frei beweglich in eine mit dem anderen starren Endstück (5) des Verbindungsarmes (3) verbundene Führungsvorrichtung (16) eingreift.

7. Verbindungsarm nach einem der Ansprüche 5 und 6, dadurch gekennzeichnet, daß wenigstens eine Lamelle (13) im wesentlichen eine Trapezform aufweist, deren kleine Basis dem freibeweglichen Ende zugewandt ist.

8. Verbindungsarm nach einem der Ansprüche 5 bis 7, dadurch gekennzeichnet, daß wenigstens eine Lamelle (13), vorzugsweise jedoch jede einzelne, aus einem Verbundwerkstoff hergestellt ist, und vorzugsweise aus einem flachen Bündel aus Rovings besteht, die im wesentlichen aus in einer Richtung verlaufenden mineralischen oder synthetischen Fasern bestehen, die durch Tränkung in einem polymerisierenden Kunstharz zusammengehalten ist.

9. Verbindungsarm nach einem der Ansprüche 5 bis 8, dadurch gekennzeichnet, daß die Stäbe (8) in dem Bündel (6) aus Stäben (8) und dem diese einhüllenden Elastomer (9) im wesentlichen in zwei Hälften aufgeteilt sind, die einerseits auf der Seite des Dämpfungskernes (7) und andererseits den ebenen Seiten der Lamelle(n) (13) zugewandt liegen.

10. Verbindungsarm nach einem der Ansprüche 6 bis 9, dadurch gekennzeichnet, daß der Dämpfungskern (7) über eine einzige Scherungslamelle (13) verfügt, deren mit dem starren Endstück (2) des Verbindungsarmes (3) verbundenes Längsende mit einem in das starre Endstück (2) eingespannten verstärkten Fußende (14) ein Stück bildet, während das freibewegliche Längsende der Lamelle (13) gleitend in einem Führungsschlitz (15) liegt, welcher in einem in dem anderen starren Endstück (5) des Verbindungsarmes (3) eingespannten Führungsblock (16) ausgespart ist, wobei der genannte Führungsblock (16) im wesentlichen die gleiche Dicke wie das Fußende (14) aufweist, und eine dichte und biegsame Umhüllung (11) in Form einer Hülse das Fußende (14) mit dem Führungsblock (16) verbindet und dabei um die Lamelle (13) abdichtend eine mit der Dämpfungsflüssigkeit (12) gefüllte Kammer bildet.

11. Verbindungsarm nach einem der Ansprüche 5 bis 9, dadurch gekennzeichnet, daß der Dämpfungskern in einer einzigen, mit Dämpfungsflüssigkeit (32) gefüllten und von einer einzigen, dichten und biegsamen Umhüllung (31) abgeschlossenen Kammer einen Stapel mehrerer nicht aneinanderstoßender, im wesentlichen paralleler und in Abstand voneinander gehaltener Lamellen (33a, 33b, 33c) aufweist.

12. Verbindungsarm nach Anspruch 11, dadurch gekennzeichnet, daß die Längsenden, über welche die Lamellen (33a, 33b, 33c) mit einem starren Endstück des Verbindungsarmes verbunden sind, jeweils einstückig mit einem verstärkten, in jeweils das eine oder andere der starren Endstücke des Verbindungsarmes eingespannten Fußende ausgebildet sind.

13. Verbindungsarm nach den Ansprüchen 11 und 12, dadurch gekennzeichnet, daß die Längsenden der einstückig mit dem starren Endstück des Verbindungsarmes verbundenen Lamellen (33a, 33c) ein Stück mit einem einzigen massiven und in das starre Endstück des Verbindungsarmes (34) eingespannten Fußende bilden.

14. Verbindungsarm nach einem der Ansprüche 12 und 13, dadurch gekennzeichnet, daß wenigstens ein in ein starres Endstück des Verbindungsarmes eingespanntes Fußende (36) gleichzeitig einen Führungsblock bildet, der mit wenigstens einem Führungsschlitz (35a, 35c) versehen ist, in welchen das freibewegliche Längsende einer Lamelle (33a, 33c) gleitend eingreift, deren anderes Längsende mit einem in das andere starre Endstück des Verbindungsarmes eingespannten Fußende (34) verbunden ist.

15. Verbindungsarm nach einem der Ansprüche 10 bis 14, in welchem die Stäbe (48) in dem Bündel (46) jeweils über jede Seite des länglichen Zentralteiles (44) hinausverlängert sind, und, wenigstens auf einer Seite des letiteren, in Schichten (60) von Stäben angeordnet sind, die alternierend mit eingeschobenen Verstärkungen (50), in der Form von relativ steifen Platten und/oder Gewebelagen aus mineralischen oder synthetischen Fasern, aufeinandergestapelt sind, wobei dieser Stapel von einem Kunstharz durchtränkt und/oder von einer polymerisierten Umhüllung umgeben wird, um wenigstens eines der starren Endstücke (42, 45) des Verbindungsarmes (43) zu bilden, dadurch gekennzeichnet, daß wenigstens ein eingespanntes Fußende (54) und/oder wenigstens ein Führungsblock (56) einer Lamelle (53) in den genannten alternierenden Stapel (42, 45) eingefügt und in diesen integriert ist.

16. Verbindungsarm nach Anspruch 15, dadurch gekennzeichnet, daß sie wenigstens eine Führungsvorrichtung umfaßt, die aus wenigstens zwei im wesentlichen parallelen festen Platten (16) besteht, welche in einen ein starres Endstück (5) des Verbindungsarmes (3) bildenden, zusammengefügten Stapel integriert sind und wenigstens durch eine Zwischenlage (10) des Stapels voneinander getrennt sind, wobei die genannten Platten (16) in die im Bündel (6) befindliche Kammer hineinragen, um zwischen ihnen einen Führungsschlitz (15) für eine Lamelle (13) zu bilden.

17. Mehrblättriger Rotor, dadurch gekennzeichnet, daß jedes der Rotorblätter mit der Rotornabe (1) über einen Verbindungsarm (3) nach einem der Ansprüche 1 bis 16 verbunden ist, wobei das eine starre Endstück (5) des Verbindungsarmes (3) mit dem unteren Teil des entsprechenden Rotorblattes und das andere starre Endstück (2) mit der Nabe (1) verbunden ist.

18. Mehrblättriger Rotor nach Anspruch 17 mit variabler Steigung, der wenigstens einen Bestandteil des rotierenden Tragwerkes eines Luftfahrzeuges darstellt, dadurch gekennzeichnet, daß die Lamelle(n) (13) jedes Verbindungsarmes (3) im wesentlichen zu der Rotorebene parallel ist/sind.

19. Mehrblättriger Rotor nach Anspruch 18, dadurch gekennzeichnet, daß sich einerseits der Querschnitt des länglichen Zentralteiles (4) jedes Verbindungsarmes (3) und andererseits die Breite wenigstens einer Lamelle (13) jedes Verbindungsarmes (3) vom mit der Nabe (1) verbundenen starren Endstück (2) zu jenem (5) mit dem Rotorblatt verbundenen hin fortschreitend verkleinern.

20. Rotor nach Anspruch 19, dadurch gekennzeichnet, daß die maximale Breite des länglichen Zentralteiles (4) jedes Verbindungsarmes (3), gemessen senkrecht zu seiner Längsachse und im wesentlichen in der Rotationsebene des Rotors, konstant bleibt, während seine Dicke, gemessen im wesentlichen senkrecht zur Rotationsebene, von dem mit der Nabe (1) verbundenen starren Endstück (2) zu jenem (5) mit dem Rotorblatt verbundenen hin fortschreitend abnimmt.

21. Rotor nach einem der Ansprüche 17 bis 20, dadurch gekennzeichnet, daß das längliche Zentralteil (4) jedes Verbindungsarmes (3) einen Querschnitt im wesentlichen ovaler Form aufweist, dessen Hauptachse im wesentlichen in der Rotorebene liegt, oder eine polygonale, insbesondere oktogonale Form, mit zwei großen, zueinander parallelen und im wesentlichen in der Rotorebene liegenden Seiten.

22. Rotor nach einem der Ansprüche 17 bis 21, dadurch gekennzeichnet, daß das längliche Zentralteil (4, 44) im erweiternden Bereich jedes Verbindungsarmes mit seiner größten Achse gegenüber der Rotorachse um den gleichen Winkel wie der untere Teil des entsprechenden Rotorblattes leicht geneigt ist.

23. Rotornabe nach einem der Ansprüche 17 bis 22, der Gattung mit einem starren Zentralkörper (2), der zur Verbindung mit einem Drehmast zwecks gemeinsamer Rotation um eine Rotationsachse des Rotors dient, und mit im wesentlichen radialen Armen (3), die in ihrer Zahl der Anzahl der Rotorblätter entsprechen und die jeweils ein Rotorblatt mit dem Nabenkörper (2) verbinden, dadurch gekennzeichnet, daß die im wesentlichen radialen Verbindungsarme (3) nach einem der Ansprüche 1 bis 16 sind, deren starren Endstücke (5), die jeweils zur Verbindung mit einem entsprechenden Rotorblatt vorgesehen sind, als Aufnahmevorrichtung für Rotorblätter, insbesondere als Gabelgelenk (5) ausgebildet sind, während die anderen starren Endstücke (2) der Verbindungsarme (3) in den Nabenkörper (2) integriert sind.

**Claims**

1. Connecting arm, intended to connect two relatively rigid bodies, such as a rotor blade and a hub (1), permitting limited relative movements of those bodies equivalent to rotations about at least one axis and, preferably, round three orthogonal axes two by two, and having, between two rigid end portions (2,5), intended to be each attached to or at least partially integrated with one of the bodies, an elongate central portion (4), flexible in bending and twisting providing, with damping, a resilient return towards a middle rest position of the two bodies, and which comprises a longitudinal composite bundle (6) of substantially unidirectional rods (8), having a high mechanical strength, especially tensile strength, each of which has a certain elasticity and is formed by bonding a large number of mineral or synthetic fibres and/or filaments with a polymerised synthetic impregnating resin, each rod (8) being individually coated with a flexible vulcanised elastomer (9) having a relatively low shear coefficient and a significant persistence in deformation, which bonds the said rods (8) forming the said composite bundle (6), characterised in that the elongate portion (4) also comprises a longitudinal damping core (7) having at least one longitudinal leaktight chamber, within the bundle (6) and filled with a damping fluid (12), and at least one longitudinal shear member (13) extending into each chamber and rigidly connected, by only one of its longitudinal ends, to a rigid end portion (2) of the arm (3), so that any deformation of the elongate portion (4) in at least one direction results in damping which is complementary to that provided by the coating elastomer (9), and obtained by shear of the fluid (12) between the shear member or members (13) and the composite bundle (6) which surrounds them.

2. Connecting arm according to Claim 1, characterised in that at least one leaktight chamber of the damping core (7) is at least partially defined by a leaktight flexible envelope (11), such as an elastomeric bladder.

3. Connecting arm according to Claim 2, characterised in that the damping fluid (12) is a silicon oil or gel having a high molecular weight, non-crosslinked or only slightly crosslinked, paste-like in appearance and having a consistency midway between a liquid and a resilient solid, and displaying a pseudo-plastic behaviour producing a high dissipation of energy under mechanical stress.

4. Connecting arm according to Claim 3, characterised in that the silicon oil is selected from the group of methylpolysiloxanes.

5. Connecting arm according to one of Claims 1 to 4, characterised in that at least one shear member is a longitudinal strap (13) which is rigid in bending in its plane but flexible in bending perpendicular to its plane and in torsion about its longitudinal axis.

6. Connecting arm according to Claim 5, characterised in that the longitudinal end of at least one strap (13), on the opposite side from that by which the said strap (13) is rigidly connected to a rigid end portion (2) of the arm (3), is freely engaged in a guide member (16) rigidly connected to the other rigid end portion (5) of the arm (3).

7. Connecting arm according to one of Claims 5 and 6, characterised in that at least one strap (13) has a substantially trapezoidal shape with the small base facing towards its free longitudinal end.

8. Connecting arm according to one of Claims 5 to 7, characterised in that at least one strap (13), but preferably each of the latter, is produced from composite material, and preferably composed of a flat bundle of substantially unidirectional synthetic or mineral fibre rovings which are bonded by a polymerised synthetic impregnating resin.

9. Connecting arm according to one of Claims 5 to 8, characterised in that, in the bundle (6) of rods (8) and coating elastomer (9), the rods (8) are substantially divided into two halves respectively located on each side of the damping core (7) and opposite the flat faces of the strap or straps (13).

10. Connecting arm according to one of Claims 6 to 9, characterised in that the damping core (7) comprises a single shear strap (13), of which the longitudinal end rigidly connected to a rigid end portion (2) of the arm (3) is integral with an overthickened foot (14) for fitting in the said rigid end portion (2), while the free longitudinal end of the strap (13) is engaged so as to slide in a guide slot (15) provided in a guide block (16) for fitting in the other rigid end portion (5) of the arm (3), the said block (16) being substantially of the same thickness as the foot (14), and a leaktight flexible envelope (11), in the form of a sleeve, connects the foot (14) to the guide block (16), closing in a leaktight manner round the strap (13) a single chamber filled with the damping fluid (12).

11. Connecting arm according to one of Claims 5 to 9, characterised in that the damping core comprises a non-contiguous stack of a plurality of straps (33a,33b,33c) substantially parallel to and spaced from one another, inside a single chamber filled with damping fluid (32) and closed by a single leaktight flexible envelope (31).

12. Connecting arm according to Claim 11, characterised in that the longitudinal ends by which the straps (33a,33b,33c) are rigidly connected to a rigid end portion of the arm are each integral with an overthickened foot (34,36) for fitting alternatively in one or other of the said rigid end portions of the arm.

13. Connecting arm according to Claims 11 and 12, characterised in that the longitudinal ends of the straps (33a,33c) rigidly connected to one and the same rigid end portion of the arm are integral with a single solid foot (34) for fitting in the said rigid end portion of the arm.

14. Connecting arm according to either of Claims 12 and 13, characterised in that at least one foot (36) for fitting in a rigid end portion of the arm simultaneously forms a guide block having at least one guide slot (35a, 35c) in which there is slidingly engaged the free longitudinal end of a strap (33a,33c) the other longitudinal end of which is rigidly connected to a foot (34) for fitting in the other rigid end portion of the arm.

15. Connecting arm according to one of Claims 10 to 14, wherein the rods (48) of the composite bundle (46) are extended on each side of the elongate central portion (44) and are arranged, at least on one side of the latter, in layers (60) of rods superposed in an alternating stack with reinforcing support inserts (50) made of relatively rigid plates and/or layers of mineral or synthetic fibre cloth, the stack being bonded by a polymerised synthetic impregnating and/or coating resin to form at least one rigid end portion (42,45) of the arm (43), characterised in that at least one mounting foot (54) and/or at least one guide block (56) of a strap (53) is inserted and integrated in the said alternating stack (42,45).

16. Connecting arm according to Claim 15, characterised in that it comprises at least one guide member comprising at least two rigid plates (16), substantially parallel, incorporated in a bonded stack forming a rigid end portion (5) of the arm (3) and separated from one another by at least one insert layer (10) of the stack, the said plates (16) projecting (17) into the chamber within the bundle (6) in order to define between them at least one guide slot (15) of a strap (13).

17. Multi-blade rotor, characterised in that each rotor blade is connected to the rotor hub (1) by a connecting arm (3) according to one of Claims 1 to 16, the two rigid end portions (2,5) of which are connected one (5) to the root of the corresponding blade and the other (2) to the hub (1).

18. Multi-blade rotor according to Claim 17, with variable pitch and forming at least part of the rotary wing of a rotary wing aircraft, characterised in that the strap or straps (13) of each connecting arm (3) is or are substantially parallel to the plane of the rotor.

19. Multi-blade rotor according to Claim 18, characterised in that on the one hand the transverse section of the elongate central portion (4) of each connecting arm (3), and on the other hand the width of at least one strap (13) of each connecting arm (3) decrease progressively from the rigid end portion (2) connected to the hub (1) towards that (5) connected to the blade.

20. Rotor according to Claim 19, characterised in that the maximum width of the elongate central portion (4) of each connecting arm (3), measured perpendicularly to its longitudinal axis and substantially in the plane of rotation of the rotor, remains constant while its thickness, measured substantially perpendicularly to the said plane of rotation, decreases progressively from the rigid end portion (2) connected to the hub (1) to that (5) connected to the blade.

21. Rotor according to one of Claims 17 to 20, characterised in that the elongate central portion (4) of each connecting arm (3) has a transverse section which is substantially oval in shape, the major axis being located substantially in the plane of the rotor, or polygonal in shape, especially octagonal, with two long sides parallel to each other and substantially to the plane of the rotor.

22. Rotor according to one of Claims 17 to 21, characterised in that the elongate central portion (4,44) of progressively changing section of each connecting arm has its major axis inclined slightly with respect to the plane of the rotor, by the same angle as the root of the corresponding blade.

23. Hub of a rotor according to one of Claims 17 to 22, of the type having a rigid central body (2), intended to be rigidly connected in rotation to a rotor mast about a rotation axis of the rotor, and substantially radial arms (3), equal in number to the number of rotor blades, and each connecting a blade to the hub body (2), characterised in that the substantially radial arms are connecting arms (3) according to one of Claims 1 to 16, the rigid end portions (5) of which, each intended to be connected to a corresponding blade, are formed as blade return members, such as clevises (5), while the other rigid end portions (2) of the arms (3) are integrated with the hub body (2).

FIG. 2

FIG. 1

EP 0 294 289 B1

FIG. 3

FIG.4

FIG.5

FIG.8

FIG.7

FIG.6

EP 0 294 289 B1